# EUROPÄISCHE PATENTSCHRIFT

(11) **EP 2 305 495 B1**
(45) Veröffentlichungstag und Bekanntmachung des Hinweises auf die Patenterteilung: **30.11.2016**
(21) Anmeldenummer: 10184431.4
(22) Anmeldetag: 30.09.2010
(51) Int. Cl.: B60H 1/00, B60H 1/34, B60H 1/24

(54) **Kraftfahrzeugklimaanlage**
Heating, ventilating and / or air conditioning apparatus for motor vehicle
Appareil de chauffage, ventilation et/ou climatisation pour véhicule automobile

(30) Priorität: 01.10.2009 DE 102009043687
(43) Veröffentlichungstag der Anmeldung: 06.04.2011
(73) Patentinhaber: MAHLE Behr GmbH & Co. KG, 70469 Stuttgart (DE)
(72) Erfinder: Anranter, Robert, 71701 Schwieberdingen (DE)
(74) Vertreter: Grauel, Andreas

(56) Entgegenhaltungen:
- WO-A1-91/06441
- DD-A- 10 230
- DE-U1-202004 016 775
- US-A- 3 277 811
- US-A1- 2003 102 690
- US-B1- 6 547 301

## Beschreibung

Die Erfindung betrifft eine Luftzuführungseinrichtung gemäß dem Oberbegriff des Anspruches 1.

In Kraftfahrzeugen werden Verbrennungsmotoren zum Antrieb eingesetzt. Dabei ist der Verbrennungsmotor durch eine Stirnwandung von dem Fahrzeuginnenraum mit den Insassen abgetrennt. Außerdem weisen Kraftfahrzeuge Getriebe oder Abgaswärmetauscher auf, die mittels einer Wandung eines Getriebe- oder Kardantunnels von dem Fahrzeuginnenraum abgetrennt sind. Diese Antriebsaggregate, insbesondere der Verbrennungsmotor, das Getriebe oder ein Abgaswärmetauscher, erzeugen große Mengen an Abwärme. Ein Teil dieser Abwärme gelangt dabei durch die Stirnwandung sowie die Wandung des Getriebe- oder Kardantunnels auch in den Innenraum des Kraftfahrzeuges. Diese Abwärme ist zwar im Winter bei niedrigen Außentemperaturen durchaus erwünscht, wirkt jedoch im Sommer bei hohen Außentemperaturen störend. Eine Bodenwandung einer Karosserie des Kraftfahrzeuges weist im Allgemeinen eine geringere thermische Isolierung auf, so dass dadurch im Winter bei niedrigen Außentemperaturen im Fahrzeuginnenraum im Bereich der Bodenwandung der Karosserie geringe Temperaturen auftreten. Auch dies ist im Winter im Fahrzeuginnenraum störend, weil dadurch im unmittelbaren Bereich an der Bodenwandung der Karosserie niedrige Temperaturen im Innenraum des Kraftfahrzeuges auftreten.

In einen Fußraum des Kraftfahrzeuges mündet im Allgemeinen ein im Wesentlichen spotartiger Luftausströmer. Mittels des Luftausströmers kann im Winter warme Luft und im Sommer kalte Luft in den Fußraum eingeleitet werden. Das Leiten von kalter oder gekühlter Luft im Sommer in den Fußraum ist jedoch störend, weil dadurch die Füße unangenehm abgekühlt werden. Durch das gezielte Einleiten von erwärmter Luft im Winter ist eine gleichmäßige Erwärmung des Fußraumes und angrenzender Bereiche nicht möglich.

Die WO 91/06441 zeigt eine Luftzuführungseinrichtung für ein Kraftfahrzeug. Eine Bodenmatte weist eine Vielzahl von Luftkanälen mit Öffnungen auf. Durch die Öffnungen der Luftkanäle kann gekühlte oder erwärmte Luft in den Fahrzeuginnenraum einströmen.

Die US 2003/102690 offenbart eine Luftzuführungseinrichtung gemäß dem Oberbegriff des Anspruchs 1.

Die Aufgabe der vorliegenden Erfindung besteht deshalb darin, eine Luftzuführungseinrichtung zur Verfügung zu stellen, bei der Abwärme von Antriebsaggregaten in einem Fahrzeuginnenraum ohne unangenehme und spotartig gerichteten Luftstrahlen zugfrei abgekühlt werden können und Kälte aus einer Umgebung an Wandungen der Karosserie gleichmäßig erwärmt werden kann.

Diese Aufgabe wird gelöst mit einer Luftzuführungseinrichtung für eine Kraftfahrzeugklimaanlage mit den Merkmalen des Anspruchs 1. Der Bodenbelag, beispielsweise eine Bodenmatte oder eine Teppicheinlage für ein Kraftfahrzeug, ist dabei vorzugsweise aus einem biegbaren und/oder einem elastischen Material, insbesondere Kunststoff, ausgebildet. Damit kann sich der Bodenbelag leicht unterschiedlichen Formen anpassen und es ist aufgrund der durch den wenigstens einen Luftkanal durchgeleiteten Luft eine gleichmäßige und großflächige Kühlung und Erwärmung von Begrenzungsflächen, d. h. z. B. dem Bodenbelag, innerhalb des Fahrzeuginnenraumes eines Kraftfahrzeuges möglich.

Insbesondere ist der wenigstens eine Luftkanal vollständig von dem Bodenbelag, insbesondere der Bodenschicht des Bodenbelages, begrenzt und/oder der wenigstens eine Luftkanal ist in den Bodenbelag, insbesondere die Bodenschicht des Bodenbelages, integriert.

Gemäß der Erfindung ist der wenigstens eine Luftkanal oberseitig von dem Bodenbelag, insbesondere der Bodenschicht des Bodenbelages, begrenzt und unterseitig von einer Auflage, insbesondere Karosserie, für den Bodenbelag begrenzt. Die Luftzuführungseinrichtung ist auf eine Auflage, z. B. eine Stirnwandung eines Kraftfahrzeuges, eine Wandung eines Getriebe- oder Kardantunnels oder einer Bodenwandung der Karosserie, aufgelegt.

Gemäß der Erfindung weist der Bodenbelag, insbesondere die Bodenschicht, eine strukturierte und wellenförmige Unterseite auf, so dass sich der wenigstens eine Luftkanal als wenigstens ein Hohlraum zwischen dem Bodenbelag und der Auflage ausbildet, vorzugsweise betragen Höhendifferenzen der strukturierten Unterseite wenigstens 1 mm, 2 mm, 5 mm oder 10 mm. Aufgrund der strukturierten Unterseite des Bodenbelages, insbesondere der Bodenschicht, bilden sich zwischen dem Bodenbelag als Luftzuführungseinrichtung und der Auflage Hohlräume aus. Diese Hohlräume werden dabei als Luftzuführungskanäle verwendet, so dass in diese Luftzuführungskanäle, welche sich zwischen dem Bodenbelag und der Auflage ausbilden, Luft eingeleitet werden kann. Mittels der eingeleiteten Luft, welche von einer Kraftfahrzeugklimaanlage gekühlt oder erwärmt wurde, kann somit der Innenraum eines Kraftfahrzeuges temperiert werden.

Vorzugsweise weist der Bodenbelag eine Deckschicht auf, aus einem Gewebematerial, z. B. einen Teppich, und die Bodenschicht besteht wenigstens teilweise, insbesondere vollständig, aus einem Schaumstoffmaterial oder einem elastischen Kunststoffmaterial und/oder einem biegbaren Material, z. B. Kunststoff. Die Luftzuführungseinrichtung als Bodenbelag ist somit leicht biegbar und verformbar, so dass sich der Bodenbelag an unterschiedliche Formen der Auflage leicht anpassen kann und damit auch für unterschiedliche Geometrien von Karosserien eingesetzt werden kann.

In einer Variante weist das Gewebematerial keine Öffnungen zum Leiten der Luft von den Öffnungen des wenigstens einen Luftkanales in den Fahrzeuginnenraum auf, so dass die Luft das Gewebematerial diffus durchströmt. Die Luft kann durch Öffnungen in der Luftzuführungseinrichtung aus dem wenigstens einen Luftkanal ausströmen. Diese Öffnungen münden dabei an ein unteres Ende der Deckschicht, die für Luft durchlässig ist und beispielsweise aus einem Gewebematerial besteht. Somit durchströmt die aus den Luftkanälen durch die Öffnungen ausgeleitete Luft diffus das Gewebematerial bzw. die Deckschicht, so dass dadurch die Luft gleichmäßig verteilt und nicht strahlartig in den Innenraum des Kraftfahrzeuges eingeleitet wird. Damit wird der Fahrkomfort erhöht, weil eine zugfreie Einleitung der gekühlten oder erwärmten Luft in den Innenraum des Kraftfahrzeuges gewährleistet ist. Als die nicht vorhandenen Öffnungen des Gewebemateriales werden vorzugsweise Öffnungen verstanden, deren Größe im Wesentlichen, d. h. mit einer Abweichung von weniger als 100% oder 50%, der Größe der Öffnungen an dem Luftkanal entspricht.

Gemäß der Erfindung ist unterhalb wenigstens 50 %, 70 %, 80 % oder 90 % der Oberfläche des Bodenbelages, insbesondere der Deckschicht, der wenigstens eine Luftkanal ausgebildet, insbesondere weist der wenigstens eine Luftkanal einen ellipsenförmigen oder schlitzförmigen Querschnitt auf, so dass die Oberseite des Bodenbelages mittels Wärmeleitung von dem wenigstens einen Luftkanal zu der Oberseite und umgekehrt großflächig temperierbar ist. Das Temperieren der Oberfläche der Luftzuführungseinrichtung bzw. des Bodenbelages wird somit nicht nur durch die Zuführung von durch den wenigstens einen Luftkanal geleiteter Luft, welche durch die Öffnungen ausströmt, ausgeführt, sondern auch durch Wärmeleitung in dem Bodenbelag von dem Luftkanal zu der Oberfläche und umgekehrt.

Im Nachfolgenden werden Ausführungsbeispiele der Erfindung unter Bezugnahme auf die beigefügten Zeichnungen näher beschrieben. Es zeigt:
- Fig. 1: einen Längsschnitt eines Kraftfahrzeuges mit einer Luftzuführungseinrichtung und einem Luftausströmer,

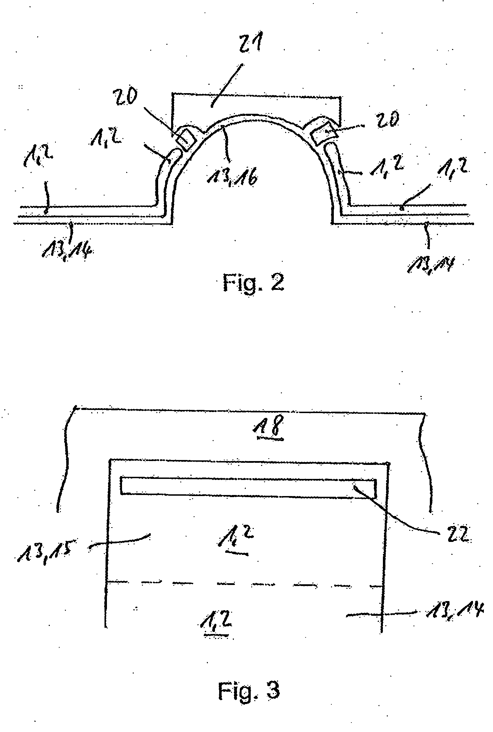

- Fig. 2: einen Querschnitt eines Getriebetunnels des Kraftfahrzeuges mit der Luftzuführungseinrichtung,
- Fig. 3: eine Ansicht eines Fußraumes des Kraftfahrzeuges mit der Luftzuführungseinrichtung und dem Luftausströmer,
- Fig. 4: einen Querschnitt der Luftzuführungseinrichtung in einem nicht beanspruchten Ausführungsbeispiel,
- Fig. 5: den Querschnitt der Luftzuführungseinrichtung in einem nicht beanspruchten Ausführungsbeispiel,
- Fig. 6: einen Querschnitt eines Bodenbelages in einem nicht beanspruchten Ausführungsbeispiel und
- Fig. 7: den Querschnitt des Bodenbelages gemäß der Erfindung.

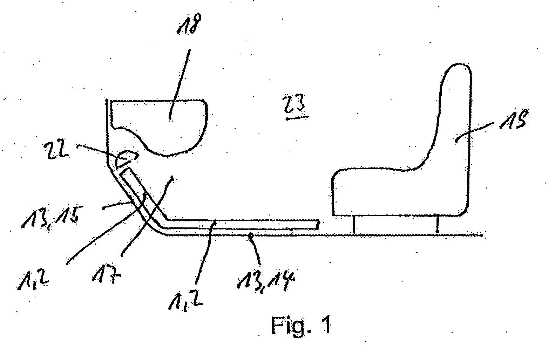

In Fig. 1 ist ein Längsschnitt eines Kraftfahrzeuges mit einer Luftzuführungseinrichtung 1 bzw. einem Bodenbelag 2 abgebildet. Die Luftzuführungseinrichtung 1 und der Bodenbelag 2 liegen dabei auf einer Karosserie 13 des Kraftfahrzeuges auf. Die Karosserie 13 als Auflage 12 für die Luftzuführungseinrichtung 1 und den Bodenbelag 2 wird von einer Bodenwandung 14 und einer Stirnwandung 15 gebildet. Die Stirnwandung 15 trennt dabei einen Fahrzeuginnenraum 23 von einem nicht dargestellten Motorraum mit einem Verbrennungsmotor ab. Ein Fahrzeugsitz 19 ist dabei ein Vordersitz in dem Kraftfahrzeug, da ein Fußraum 17 an eine Instrumententafel 18 angrenzt. Die Luftzuführungseinrichtung 1 und/oder der Bodenbelag 2 können dabei auch in analoger Weise an einem Fußraum eines Rücksitzes des Kraftfahrzeuges angeordnet werden (nicht dargestellt).

In dem Fußraum 17 unterhalb der Instrumententafel 18 ist außerdem ein Luftausströmer 22 (Fig. 1) angeordnet. Die Länge des Luftausströmers 22 umfasst dabei im Wesentlichen die gesamte Breite des Fußraumes 17 unterhalb der Instrumententafel 18. Der Luftausströmer 22 weist dabei eine Luftausströmöffnung (nicht dargestellt) auf, dessen Länge der gesamten Länge des Luftausströmers 22 im Wesentlichen entspricht. Anstelle der Luftausströmöffnung kann der Luftausströmer 22 auch eine große Anzahl an Luftausströmöffnungen aufweisen. Damit kann der Raum an dem Luftausströmer 22 innerhalb des Fußraumes 17 bzw. des Fahrzeuginnenraumes 23 gleichmäßig mit gekühlter und/oder erwärmter Luft aus einer nicht dargestellten Kraftfahrzeugklimaanlage beaufschlagt werden. Aufgrund der großen und länglichen Luftausströmöffnung des Luftausströmers 22 wird dabei die Luft mit einer geringen Geschwindigkeit dem Fußraum 17 zugeführt, so dass eine im Wesentlichen zugfreie und spotfreie Luftzuführung durch den Luftausströmer 22 in den Fußraum 17 gewährleistet ist.

Die Luftzuführungseinrichtung 1 und/oder der Bodenbelag 2 können auch an einer Wandung 16 eines Getriebe- oder Kardantunnels angeordnet werden. Der Getriebe- und/oder Kardantunnel ist dabei zwischen den beiden Vordersitzen 19 des Kraftfahrzeuges ausgebildet und oberhalb der Wandung 16 des Getriebe- oder Kardantunnels befindet sich eine Verkleidung 21. Ferner befindet sich zwischen der Wandung 16 des Getriebe- oder Kardantunnels und der Verkleidung 21 auf jeder Seite jeweils ein Fondbelüftungskanal 20. Abweichend hiervon kann auch nur ein Fondbelüftungskanal 20 vorhanden sein (nicht dargestellt). Durch den Fondbelüftungskanal 20 wird Luft aus einem Gehäuse der Kraftfahrzeugklimaanlage in den Fahrzeuginnenraum 23 im Bereich der Rücksitze zugeführt.

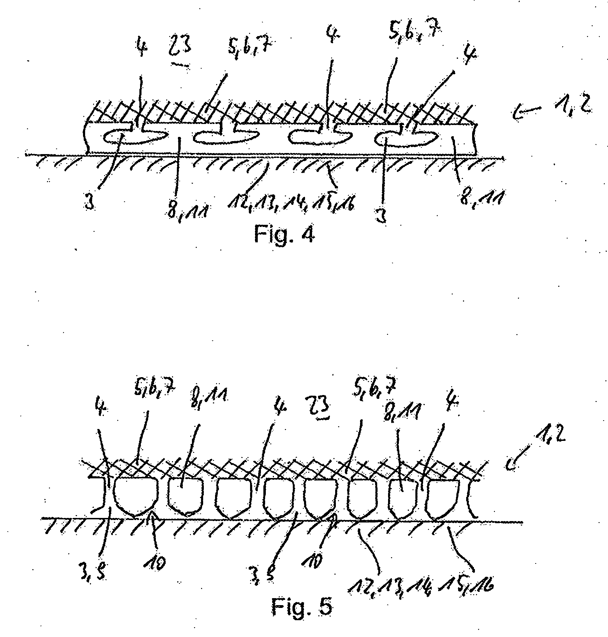

In Fig. 4 und 5 ist ein erstes und zweites nicht beanspruchtes Ausführungsbeispiel der Luftzuführungseinrichtung 1 als Bodenbelag 2 dargestellt. Die Luftzuführungseinrichtung 1 als Bodenbelag 2 weist eine Deckschicht 5 und eine Bodenschicht 8 auf. Die Deckschicht 5 ist dabei ein Gewebematerial 6 als Teppich 7 und dient zur Auflage beispielsweise der Füße der Insassen des Kraftfahrzeuges. Die Bodenschicht 8 besteht aus einem elastischen und biegbaren Kunststoff, beispielsweise einem Schaumstoffmaterial oder einer Schaumstoffschicht 11. In die Bodenschicht 8 sind schlitzförmige oder ellipsenförmige Luftkanäle 3 eingearbeitet. Die Luftkanäle 3 sind dabei mäandrierend innerhalb der Bodenschicht 8 angeordnet. Der Bodenbelag 2 weist dabei eine nicht dargestellte Einlassöffnung für die Luft auf, welche den Luftkanälen 3 zuzuführen ist. An der Bodenschicht 8 sind ferner eine Vielzahl von Öffnungen 4 angeordnet, durch welche die in die Luftkanäle 3 aus der Kraftfahrzeugklimaanlage eingeleitete Luft in den Fahrzeuginnenraum 23 ausströmen kann. Die Deckschicht 5, d. h. das Gewebematerial 6, weist dabei keine Öffnungen auf und ist luftdurchlässig ausgebildet. Dadurch kann die Luft aus den Öffnungen 4 im Bereich der Deckschicht 5 diffusartig an der Oberseite des Bodenbelages 2 ausströmen. Damit ist an der Oberseite des Bodenbelages 2 eine besonders gleichmäßige Temperierung, d. h. ein Erwärmen oder Abkühlen mittels gekühlter oder erwärmter Luft, möglich. Die Bodenschicht 8 aus der Schaumstoffschicht 11 kann sich aufgrund seiner elastischen und biegbaren Eigenschaften gut an unterschiedliche Geometrien der Karosserie 13 anpassen, so dass sich der Bodenbelag 2 auch bei unterschiedlichen Kraftfahrzeugen eingesetzt werden kann. Der Bodenbelag 2 wird dabei insbesondere an der Stirnwandung 15 oder Wandung 16 des Getriebe- oder Kardantunnels aufgelegt oder befestigt. Damit kann in vorteilhafterweise Abwärme im Sommer aus einem Verbrennungsmotor im Motorraum, welcher durch die Stirnwandung 15 in den Fahrzeuginnenraum 23 eingeleitet wird, abgeführt werden. Hierzu wird lediglich durch den Bodenbelag 2 von der Kraftfahrzeugklimaanlage gekühlte Luft eingeleitet. Dies gilt in analoger Weise auch für Abwärme, welche durch die Wandung 16 von dem Getriebe bzw. einer Abgasrückführung durch die Wandung 16 in den Fahrzeuginnenraum 23 eingeleitet wird. Der Bodenbelag 2 kann auch an der Bodenwandung 14 der Karosserie 13 aufgelegt oder befestigt werden, so dass im Winter mittels erwärmter Luft, welche durch die Luftkanäle 3 des Bodenbelages 2 geleitet wird, in den Fahrzeuginnenraum 23 durch die Bodenwandung 14 eingeleitete Kälte durch erwärmte Luft erwärmt werden kann.

Die Luftzuführungseinrichtung 1 kann beispielsweise ein einziges Bauteil für den Fußraum 17 sein. Hierzu deckt die Luftzuführungseinrichtung 1 sowohl die Bodenwandung 14, die Stirnwandung 15 und die Wandung 16 des Getriebe- oder Kardantunnels ab (nicht dargestellt). Abweichend hiervon ist es auch möglich, separat eine erste Luftzuführungseinrichtung 1 nur an der Stirnwandung 15, eine zweite Luftzuführungseinrichtung 1 nur an der Wandung 16 des Getriebe- oder Kardantunnels und eine dritte Luftzuführungseinrichtung 1 nur an der Bodenwandung 14 der Karosserie anzuordnen. Damit ist es möglich, die Temperatur im Bereich der Bodenwandung 14, der Stirnwandung 15 und der Wandung 16 unabhängig voneinander zu steuern und/oder zu regeln, indem durch drei separate Luftzuführungskanäle oder Temperierkanäle Luft aus der Kraftfahrzeugklimaanlage (nicht dargestellt) mit unterschiedlichen und entsprechend gesteuerten oder geregelten Temperaturen eingeleitet wird. Ferner ist es auch möglich, eine erste Luftzuführungseinrichtung 1 zu verwenden, welche die Stirnwandung 15 und die Wandung 16 abdeckt und eine weitere zweite Luftzuführungseinrichtung 1 zu verwenden, welche nur die Bodenwandung 14 der Karosserie 13 abdeckt. In dieser Ausgestaltung wird somit die Luftzuführungseinrichtung 1 für die Stirnwandung 15 und die Wandung 16 mit Luft mit einem ersten Temperaturniveau und die Luftzuführungseinrichtung 1 für die Bodenwandung 14 mit Luft mit einem anderen Temperaturniveau von der Kraftfahrzeugklimaanlage versorgt. Im Winter kann damit beispielsweise der Fahrzeuginnenraum 23 im Bereich der Bodenwandung 14 erwärmt werden, unabhängig von der Stirnwandung 15 und der Wandung 16.

In Fig. 5 ist ein zweites nicht beanspruchtes Ausführungsbeispiel der Luftzuführungseinrichtung 1 dargestellt. Im Nachfolgenden werden im Wesentlichen nur die Unterschiede zu dem ersten Ausführungsbeispiel gemäß Fig. 4 beschrieben. Die Unterseite der Luftzuführungseinrichtung 1 ist als wellenförmige Unterseite 10 ausgebildet. Dadurch bilden sich zwischen der Unterseite der Luftzuführungseinrichtung 1 und der Auflage 12 für die Luftzuführungseinrichtung 1, z. B. die Bodenwandung 14 und/oder die Stirnwandung 15, ein Hohlraum 9 aus. Dieser Hohlraum 9, welcher somit einerseits sowohl von der Luftzuführungseinrichtung 1 als auch von der Auflage 12 begrenzt wird, bildet somit die Luftkanäle 3. In die Bodenschicht 8 sind in analoger Weise zu dem ersten Ausführungsbeispiel eine Vielzahl von Öffnungen 4 eingearbeitet, so dass durch die Luftkanäle 3 bzw. die Hohlräume 9 die Luft aus den Luftkanälen 3 durch die Deckschicht 5 in den Fahrzeuginnenraum 23 einströmen kann.

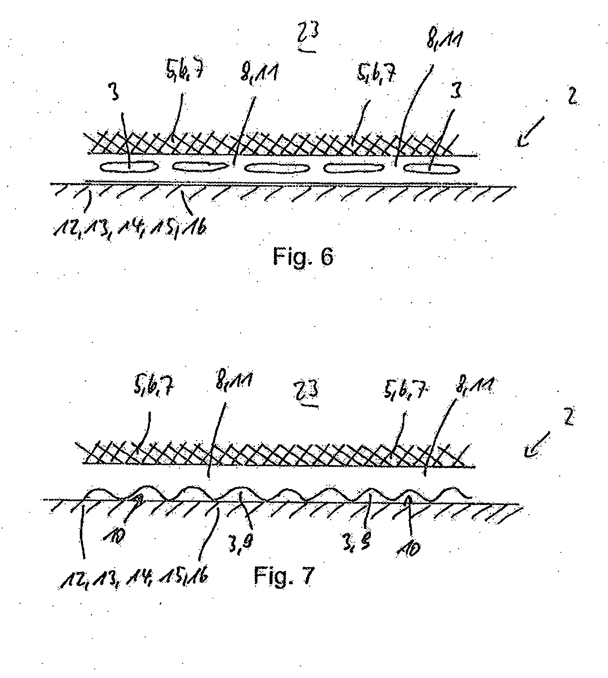

In Fig. 6 ist ein erstes nicht beanspruchtes Ausführungsbeispiel des Bodenbelages 2 dargestellt. Im Nachfolgenden werden im Wesentlichen nur die Unterschiede zu der Luftzuführungseinrichtung 1 gemäß Fig. 4 beschrieben. Die Bodenschicht 8 weist keine Öffnungen 4 zum Ausleiten von Luft aus den Luftkanälen 3 durch das Gewebematerial 6 in den Fahrzeuginnenraum 23 auf. Der Bodenbelag 2 verfügt somit neben einer Einlassöffnung zum Einleiten der Luft in den Luftkanal 3 auch über eine Auslassöffnung zum Ausleiten der Luft, welche durch die Luftkanäle 3 geströmt ist. Die Deckschicht 5 bzw. eine Oberseite des Bodenbelages 2 wird somit dadurch erwärmt oder gekühlt, dass Wärme von Luft in dem Luftkanal 3 durch Wärmeleitung durch die Bodenschicht 8 und die Deckschicht 5 an die Oberseite des Bodenbelages 2 gelangt. Dies gilt auch umgekehrt, indem zum Kühlen der Oberseite des Bodenbelages 2 Wärme von der Oberseite des Bodenbelages 2 in die Luft des Luftkanales 3 geleitet wird. Damit tritt an der Oberseite des Bodenbelages 2 keine Luftströmung auf aufgrund von ausgeleiteter Luft aus den Luftkanälen 3. Die aus der Auslassöffnung des Bodenbelages 2 ausgeleitete Luft wird vorzugsweise durch einen gesonderten nicht dargestellten Kanal im Bereich der Instrumententafel 18 in den Fahrzeuginnenraum 23 eingeleitet oder der Kraftfahrzeugklimaanlage zugeführt oder in die Umgebung des Kraftfahrzeuges abgeleitet.

In Fig. 7 ist der Bodenbelag 2 der Erfindung dargestellt. Im Nachfolgenden werden im Wesentlichen nur die Unterschiede zu dem ersten nicht beanspruchten Ausführungsbeispiel des Bodenbelages 2 gemäß Fig. 6 beschrieben. An der Unterseite des Bodenbelages 2 ist eine wellenförmige Unterseite 10 ausgebildet. Dadurch entsteht zwischen dem Bodenbelag 2, d. h. der Bodenschicht 8 und der Auflage 12, ein Hohlraum 9. Dieser Hohlraum 9 wird als Luftkanal 3 zum Durchleiten von erwärmter oder gekühlter Luft aus der Kraftfahrzeugklimaanlage genutzt.

Luft aus der Kraftfahrzeugklimaanlage für die Luftzuführungseinrichtung 1 und/oder den Bodenbelag 2 und/oder den Luftausströmer 22 wird entweder durch einen Temperierkanal der Luftzuführungseinrichtung 1, dem Bodenbelag 2 und/oder dem Luftausströmer 22 zugeführt oder wird durch Luft aus dem Fondbelüftungskanal 20 zugeführt.

Insgesamt betrachtet sind mit der erfindungsgemäßen Luftzuführungseinrichtung 1, dem erfindungsgemäßen Bodenbelag 2, dem erfindungsgemäßen Luftausströmer 22 und der erfindungsgemäßen Kraftfahrzeugklimaanlage wesentliche Vorteile verbunden. Die Abwärme aus Antriebsaggregaten, die durch die Stirnwandung 15 und die Wandung 16 in den Fahrzeuginnenraum 23 gelangt, kann zugfrei abgeführt werden. Ferner ist es auch möglich, bei niedrigen Außentemperaturen im Winter im Fahrzeuginnenraum 23 Bereiche an der Bodenwandung 14 zugfrei zu erwärmen, so dass dadurch im Fahrzeuginnenraum 23 auch im Winter bei niedrigen Außentemperaturen ein angenehmes Fahrzeugklima vorhanden ist.

### Bezugszeichenliste

- 1: Luftzuführungseinrichtung
- 2: Bodenbelag
- 3: Luftkanal
- 4: Öffnungen
- 5: Deckschicht
- 6: Gewebematerial
- 7: Teppich
- 8: Bodenschicht
- 9: Hohlraum
- 10: Wellenförmige Unterseite
- 11: Schaumstoffschicht
- 12: Auflage
- 13: Karosserie
- 14: Bodenwandung der Karosserie
- 15: Stirnwandung
- 16: Wandung eines Getriebe- oder Kardantunnels
- 17: Fußraum
- 18: Instrumententafel
- 19: Fahrzeugsitz
- 20: Fondbelüftungskanal
- 21: Verkleidung auf Getriebe- oder Kardantunnel
- 22: Luftausströmer
- 23: Fahrzeuginnenraum

## Patentansprüche

1. Luftzuführungseinrichtung (1) für eine Kraftfahrzeugklimaanlage als Bodenbelag (2) zur Zuführung von Luft an dem Bodenbelag (2) mit wenigstens einem Luftkanal (3) mit einer Vielzahl von Öffnungen (4) zum Leiten der Luft aus den Öffnungen (4) in einen Fahrzeuginnenraum (23), wobei der wenigstens eine Luftkanal (3) wenigstens teilweise von dem Bodenbelag (2), insbesondere einer Bodenschicht (8) des Bodenbelages (2), begrenzt ist, wobei unterhalb wenigstens 50 %, 70 %, 80 % oder 90 % der Oberfläche des Bodenbelages (2), insbesondere der Deckschicht (5), der wenigstens eine Luftkanal (3) ausgebildet ist, wobei der wenigstens eine Luftkanal (3) einen ellipsenförmigen oder schlitzförmigen Querschnitt aufweist, der mäandriert in der Bodenschicht angeordnet ist, so dass die Oberseite des Bodenbelages (2) mittels Wärmeleitung von dem wenigstens einen Luftkanal (3) zu der Oberseite und umgekehrt großflächig temperierbar ist, wobei der wenigstens eine Luftkanal (3) oberseitig von dem Bodenbelag (2), insbesondere der Bodenschicht (8) des Bodenbelages (2), begrenzt und unterseitig von einer Auflage (12), insbesondere Karosserie (13), für den Bodenbelag (2) begrenzt ist, **dadurch gekennzeichnet, dass** der Bodenbelag (2), insbesondere die Bodenschicht (8), eine strukturierte und wellenförmige Unterseite (10), aufweist, so dass sich der wenigstens eine Luftkanal (3) als wenigstens ein Hohlraum (9) zwischen dem Bodenbelag (2) und der Auflage (12) ausbildet, wobei vorzugsweise die Höhendifferenzen der strukturierten Unterseite wenigstens 1 mm, 2 mm, 5 mm oder 10 mm, betragen.

2. Luftzuführungseinrichtung nach Anspruch 1, **dadurch gekennzeichnet, dass** der wenigstens eine Luftkanal (3) vollständig von dem Bodenbelag (2), insbesondere der Bodenschicht (8) des Bodenbelages (2), begrenzt ist und/oder der wenigstens eine Luftkanal (3) in den Bodenbelag (2), insbesondere die Bodenschicht (8) des Bodenbelages (2), integriert ist.

3. Luftzuführungseinrichtung nach einem oder mehreren der vorhergehenden Ansprüche, **dadurch gekennzeichnet, dass** der Bodenbelag (2) eine Deckschicht (5) aus einem Gewebematerial (6), z. B. einen Teppich (7), aufweist und die Bodenschicht (8) wenigstens teilweise, insbesondere vollständig aus einem Schaumstoffmaterial (11) oder einem elastischen Kunststoffmaterial und/oder einem biegbaren Material, z. B. Kunststoff, besteht.

4. Luftzuführungseinrichtung nach Anspruch 3, **dadurch gekennzeichnet, dass** das Gewebematerial (6) keine Öffnungen zum Leiten der Luft von den Öffnungen (4) des wenigstens einen Luftkanales (3) in den Fahrzeuginnenraum aufweist, so dass die Luft das Gewebematerial (6) diffus durchströmt.

## Claims

1. An air supply means (1) for a vehicle air-conditioning system as a floor covering (2) for supplying air to the floor covering (2) with at least one air duct (3) having a plurality of openings (4) for directing the air from the openings (4) into a vehicle interior (23), wherein the at least one air duct (3) is limited at least partially by the floor covering (2), in particular a bottom layer (8) of the floor covering (2), wherein the at least one air duct (3) is formed below at least 50%, 70%, 80% or 90% of the surface of the floor covering (2), in particular of the top layer (5), wherein the at least one air duct (3) has an elliptical or slit-shaped cross-section which is arranged in the bottom layer in a meandered way, so that the upper side of the floor covering (2) can be tempered over a large area by means of heat conduction from the at least one air duct (3) to the upper side and vice versa, wherein the at least one air duct (3) is limited by the floor covering (2), in particular by the bottom layer (8) of the floor covering (2), on the topside and is limited by a support (12), in particular a body (13), for the floor covering (2) on the bottom side, **characterised in that** the floor covering (2), in particular the bottom layer (8), has a structured and wavy bottom side (10), so that the at least one air duct (3) is formed as at least one hollow space (9) between the floor covering (2) and the support (12), wherein preferably the height differences of the structured bottom side are at least 1 mm, 2 mm, 5 mm or 10 mm.

2. The air supply means according to claim 1, **characterised in that** the at least one air duct (3) is fully limited by the floor covering (2), in particular the bottom layer (8) of the floor covering (2) and/or the at least one air duct (3) is integrated in the floor covering (2), in particular the bottom layer (8) of the floor covering (2).

3. The air supply means according to one or more of the preceding claims, **characterised in that** the floor covering (2) has a top layer (5) made from a tissue material (6), e.g. a carpet (7), and the bottom layer (8) consists at least partially, in particular completely, of a foam material (11) or a flexible plastic material and/or a bendable material, e.g. plastic.

4. The air supply means according to claim 3, **characterised in that** the tissue material (6) has no openings for directing the air from the openings (4) of the at least one air duct (3) into the vehicle interior so that the air diffusely flows through the tissue material (6).

## Revendications

1. Dispositif d'alimentation d'air (1) pour un système de climatisation d'un véhicule automobile, servant de revêtement de plancher (2) pour l'alimentation d'air fourni au revêtement de plancher (2), comprenant au moins un conduit d'air (3) comportant une multiplicité d'ouvertures (4) servant à diriger l'air sortant des ouvertures (4) et passant dans un habitacle de véhicule (23), où le conduit d'air (3) au moins au nombre de un est délimité au moins partiellement par le revêtement de plancher (2), en particulier par une couche de fond (8) du revêtement de plancher (2), où le conduit d' air (3) au moins au nombre de un est configuré en dessous au moins de 50 %, de 70 %, de 80 % ou de 90 % de la surface du revêtement de plancher (2), en particulier de la couche de recouvrement (5), où le conduit d'air (3) au moins au nombre de un présente une section en forme d'ellipse ou en forme de fente, section qui est disposée dans la couche de fond en formant des méandres, de sorte que le dessus du revêtement de plancher (2) peut être tempéré sur une grande étendue de surface grâce à la conduction de chaleur provenant du conduit d'air (3) au moins au nombre de un, vers le dessus, et inversement, où le conduit d'air (3) au moins au nombre de un est délimité, sur le dessus, par le revêtement de plancher (2), en particulier par la couche de fond (8) du revêtement de plancher (2), et est délimité, sur le dessous, par une surface d'appui (12), en particulier une carrosserie (13), prévue pour le revêtement de plancher (2), **caractérisé en ce que** le revêtement de plancher (2), en particulier la couche de fond (8), présente une surface de dessous (10) structurée et de forme ondulée, de sorte que le conduit d'air (3) au moins au nombre de un est conçu comme au moins un espace creux (9) situé entre le revêtement de plancher (2) et la surface d'appui (12), où les différences de hauteur de la surface de dessous structurée sont de préférence égales au moins à 1 mm, à 2 mm, à 5 mm ou à 10 mm.

2. Dispositif d'alimentation d'air selon la revendication 1, **caractérisé en ce que** le conduit d'air (3) au moins au nombre de un est complètement délimité par le revêtement de plancher (2), en particulier par la couche de fond (8) du revêtement de plancher (2), et / ou le conduit d'air (3) au moins au nombre de un est intégré dans le revêtement de plancher (2), en particulier dans la couche de fond (8) du revêtement de plancher (2).

3. Dispositif d'alimentation d'air selon l'une ou plusieurs des revendications précédentes, **caractérisé en ce que** le revêtement de plancher (2) présente une couche de recouvrement (5) se composant d'un matériau en tissu (6), par exemple un tapis (7), et la couche de fond (8) se compose au moins en partie, en particulier en totalité, d'un matériau en mousse (11), ou bien d'une matière plastique élastique et / ou d'une matière flexible, par exemple du plastique.

4. Dispositif d'alimentation d'air selon la revendication 3, **caractérisé en ce que** le matériau en tissu (6) ne présente aucune ouverture servant à diriger l'air provenant des ouvertures (4) du conduit d'air (3) au moins au nombre de un et passant dans l'habitacle du véhicule, de sorte que l'air traverse le matériau en tissu (6) de manière diffuse.
